Europäisches Patentamt

European Patent Office

Office européen des brevets

(11) Numéro de publication: **0 242 282**
**A1**

## (12) DEMANDE DE BREVET EUROPEEN

(21) Numéro de dépôt: **87400806.3**

(22) Date de dépôt: **09.04.87**

(51) Int. Cl.⁴: **B 65 G 39/04**
**F 16 B 45/00**

(30) Priorité: **17.04.86 FR 8605537**

(43) Date de publication de la demande:
**21.10.87 Bulletin 87/43**

(84) Etats contractants désignés: **BE ES IT**

(71) Demandeur: **EQUIPEMENT MINIER**
**23, Avenue du Général de Gaulle**
**F-54280 Seichamps (FR)**

(72) Inventeur: **Mossot, Bernard**
**13 bis, rue de la Cloche**
**F-77300 Fontainebleau (FR)**

(74) Mandataire: **Rinuy, Santarelli**
**14, avenue de la Grande Armée**
**F-75017 Paris (FR)**

(54) Organe d'accrochage pour rouleau de convoyeur.

㉗ Organe d'accrochage pour rouleau de convoyeur comportant un boîtier (5) fileté intérieurement dont le fond est muni extérieurement d'un crochet (15) et un écrou creux de retenue de rouleau muni d'un filetage externe adapté à se visser à l'intérieur du boîtier, dans lequel le crochet du boîtier (15) est muni de voiles parallèles de rigidification (16, 16') et le boîtier et l'écrou sont en matière plastique moulée. La matière plastique est de préférence chargée en fibres de verre, à une teneur avantageusement supérieure à 40 %.

FIG. 2

**Description**

"Organe d'accrochage pour rouleau de convoyeur"

La présente invention concerne un organe d'accrochage pour rouleau de bande convoyeuse.

Ainsi qu'on le sait une bande convoyeuse est une bande sur laquelle reposent des objets ou du vrac et qui est guidée sur des rouleaux transversaux de guidage.

Il est connu d'utiliser des rouleaux constitués d'un câble, d'une barre (ou similaire) muni d'organes d'accrochage à ses extrémités et sur lequel sont montés des disques adjacents formant rouleaux.

Il existe des applications dans lesquelles ces rouleaux doivent travailler dans un environnement sévère, tant des points de vue mécanique et thermique que du point de vue corrosion (par des acides, des bases, des sels, des huiles, des aromates ...).

De façon classique les organes d'accrochage sont des boîtiers munis de crochets et fermés par des écrous de retenue de câble (ou barre) et sont fabriqués en fonte, ce qui nécessite des opérations successives d'usinage, de taraudage pour former des filets de liaison entre boîtier et écrou, et de traitement de surface à des fins de protection. Il en résulte des crochets de poids important et de coût de revient élevé, qui ne présentent toutefois, dans certains cas, qu'une résistance médiocre à la corrosion.

L'invention a pour objet de pallier ces inconvénients et propose à cet effet un organe d'accrochage pour rouleau de convoyeur comportant un boîtier fileté intérieurement dont le fond est muni extérieurement d'un crochet et un écrou creux de retenue de rouleau muni d'un filetage externe adapté à se visser à l'intérieur du boîtier, caractérisé en ce que le crochet du boîtier est muni de voiles parallèles de rigidification et le boîtier et l'écrou sont en matière plastique moulée.

Le remplacement de la fonte par de la matière plastique moulée permet d'alléger très nettement l'organe d'accrochage, avec une réduction du poids pouvant atteindre 1/4. La fabrication par moulage du boîtier a par ailleurs pour avantage de ne nécessiter ni usinage, ni traitement de surface. Grâce aux voiles de rigidification un tel organe d'accrochage en matière plastique moulée s'est révélé présenter une aussi bonne résistance mécanique que la fonte (si ce n'est meilleure en cas de chocs) avec en plus une bien meilleure tenue à la corrosion; les boîtiers et les écrous restent dissociables même après l'action d'acides, de bases, de sels, ce qui n'était pas le cas avec la fonte. Les organes d'accrochage se sont révélés avoir également une très bonne tenue thermique entre -40°C et 150°C environ.

De manière avantageuse la matière plastique moulée est chargée de fibres de verre, à une teneur de préférence supérieure à 30 %, par exemple égale à 40 %, ce qui assure un compromis acceptable entre l'aptitude au moulage et l'obtention d'une résistance mécanique satisfaisante.

Selon diverses dispositions préférées de l'invention :

- le crochet est formé d'une nappe recourbée d'épaisseur globalement constante, de préférence avec un profil en U avec deux flancs parallèles inclinés par rapport à l'axe du boîtier; les voiles de rigidification ont une épaisseur, mesurée parallèlement à la nappe, qui est inférieure (ou égale) à l'épaisseur de cette nappe, et une dimension en saillie, mesurée perpendiculairement à cette nappe, qui est sensiblement constante à l'écart de l'extrémité libre (ou bec) de cette dernière;
- le crochet est bordé sur chacun de ses côtés par un voile de rigidification, dont la dimension en saillie est de préférence inférieure à celle des autres voiles, avec un écartement vis-à-vis des voiles respectivement adjacents qui est inférieur à celui existant entre lesdits autres voiles;
- ces voiles intermédiaires sont en nombre impair et sont de mêmes dimensions en saillie et de même écartement;
- le boîtier et l'écrou ont des filetages à pas carré.

Des objets, caractéristiques et avantage de l'invention ressortent de la description qui suit, donnée à titre d'exemple illustratif, en regard du dessin annexé sur lequel :

- la figure 1 est une vue latérale partielle d'un rouleau de convoyeur terminé par un organe d'accrochage conforme à l'invention et représenté en coupe axiale;
- la figure 2 est une vue de profil de cet organe d'accrochage, à plus grande échelle et avec arrachement partiel; et
- la figure 3 en est une autre vue de profil selon la flèche III de la figure 2.

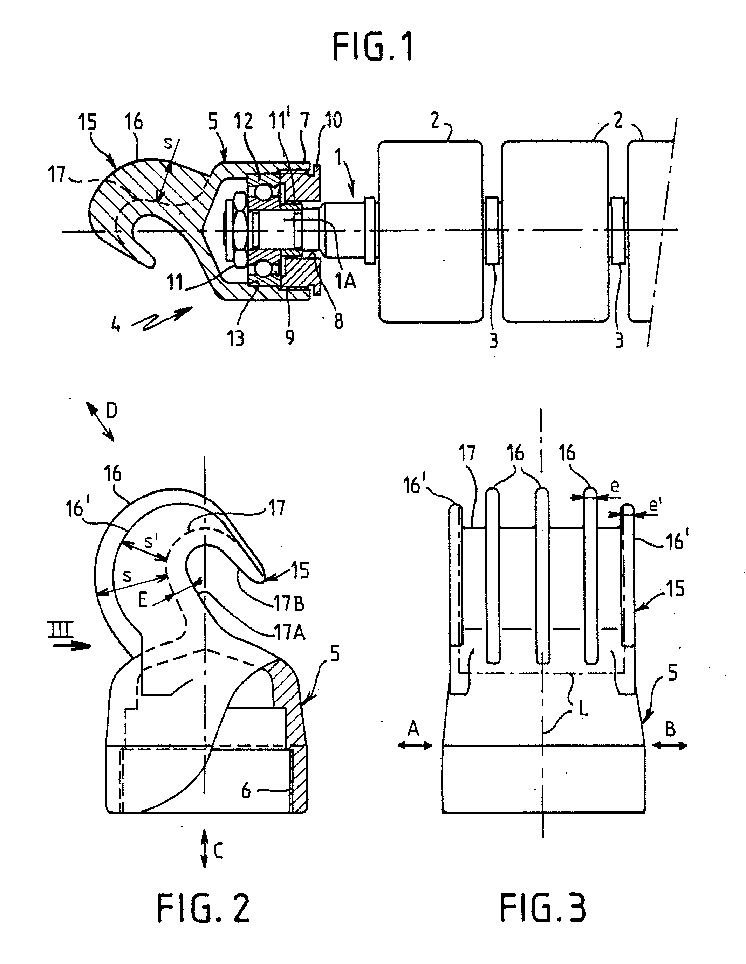

La figure 1 illustre à titre d'exemple un rouleau de convoyeur, ici formé d'un câble ou barre 1 sur lequel sont engagés des disques 2 séparés par des bagues entretoises 3 et adaptés à supporter le tapis (non représenté) d'un convoyeur.

Le câble est muni en ses extrémités de deux organes d'accrochage 4, dont seul celui de gauche est représenté à la figure 1, destinés à la mise en traction du rouleau.

Tel que représenté aux figures 1 à 3 cet organe d'accrochage 4 comporte un boîtier 5 globalement cylindrique et muni d'un filetage interne à pas carré 6, et d'un écrou 7 traversé par un alésage central 8 et muni d'un filetage externe à pas carré 9 complémentaire du filetage interne 6 du boîtier.

Cet écrou se termine par une collerette polygonale 10 permettant la saisie de l'écrou pour son vissage dans le boîtier 5.

Au travers de l'alésage central 8 de l'écrou passe une extrémité amincie 1A du câble 1, formant attache de rouleau et terminée par une portion terminale filetée sur laquelle est fixé un écrou 11. Cet écrou 11 appuie axialement par sa périphérie, à l'encontre d'une bague d'appui 11', sur la piste interne d'un roulement à billes 12 dont la piste externe est bloquée axialement entre l'écrou 7 et un épaulement 13 ménagé à l'intérieur du boîtier. L'organe d'accrochage peut ainsi tourner librement autour de son axe par rapport au câble 1.

Ainsi qu'il apparaît plus précisément aux figures 2 et 3, le boîtier 5 porte par son fond 5A un crochet 15 adapté à s'agripper sur un anneau ou une barre de retenue (non représenté).

Ce crochet 15 est muni de voiles de rigidification 16 dont la dimension en saillie (s ou s'), mesurée perpendiculairement à la surface externe du crochet, est normalement nettement plus grande que leur épaisseur e, mesurée parallèlement à cette surface extérieure (voir les figures 2 et 3, respectivement).

Ce crochet 15 est ici formé d'une nappe recourbée 17 d'épaisseur sensiblement constante E, légèrement supérieure à l'épaisseur des voiles de rigidification. Cette nappe présente un profil en U avec des flancs parallèles 17A et 17B qui sont inclinés par rapport à l'axe du boîtier. Cela facilite les opérations de moulage du boîtier.

Cette nappe, de largeur sensiblement constante, est bordée sur ses côtés latéraux par deux voiles latéraux de rigidification 16' plus petits que les voiles intermédiaires 16. L'écartement entre un voile latéral 16' et un voile intermédiaire 16 est inférieur à celui existant entre deux voiles intermédiaires. Les voiles latéraux 16' d'une part, et les voiles intermédiaires 16 d'autre part, sont identiques entre eux.

Le nombre de voiles est impair grâce à quoi le boîtier admet un plan de symétrie qui passe dans l'épaisseur d'un voile médian (voir figure 1), ce qui est favorable à une bonne résistance mécanique du crochet.

Sauf au voisinage du bec d'accrochage les dimensions en saillie des voiles de rigidification sont globalement constantes. Ces dimensions en saillie sont à une valeur minimale sur le flanc 17B de la nappe pour des raisons de facilité de moulage.

Le boîtier est une matière plastique moulée, avantageusement chargée en fibres de verre, à une teneur de préférence supérieure à 30 %, voire égale à 40 %. Il s'agit par exemple d'une matière plastique vendue sous la marque 6-2 STARGLAS PBT (norme 40-V.). Il convient en règle générale d'utiliser de préférence une matière plastique dont la résistance à la traction est supérieure à 200 N/mm$^2$ pour un allongement à rupture d'environ 1 à 2 % seulement, avec une densite de l'ordre de 1,5-1,6 g/cm$^3$.

Ce boîtier 5 peut être moulé sous basse pression, (par exemple 1 à 2 bars) à l'aide de 4 parties de moule. Des lignes de séparation entre ces parties de moule sont figurées en traits mixtes sur la figure 3. Deux parties de moule assurent la conformation du boîtier, de l'intérieur du crochet et de ses faces latérales et peuvent se déplacer selon les doubles flèches A et B. Une autre partie assure la conformation interne du boîtier et peut se déplacer selon un mouvement hélicoïdal autour de la double flèche C et une quatrième partie assure la conformation des voiles de rigidification et la surface externe de la nappe recourbée 17, et peut se déplacer parallèlement aux flancs 17A et 17B, selon la double flèche D de la figure 2.

Il va de soi que la description qui précède n'a été proposé qu'à titre illustratif et que de nombreuses variantes peuvent être proposées par l'homme du métier sans sortir du cadre de l'invention. Ainsi, notamment, le boîtier et l'écrou peuvent être constitués en des matières moulées distinctes.

## Revendications

1. Organe d'accrochage pour rouleau de convoyeur comportant un boîtier (5) fileté intérieurement dont le fond est muni extérieurement d'un crochet (15) et un écrou creux (7) de retenue de rouleau muni d'un filetage externe adapté à se visser à l'intérieur du boîtier, caractérisé en ce que le crochet (15) du boîtier est muni extérieurement d'une pluralité de voiles parallèles de rigidification (16, 16') dont la dimension en saillie (s , s' ) est normalement nettement plus grande que leur largeur (e), et en ce que le boîtier et l'écrou sont en matière plastique moulée.

2. Organe d'accrochage selon la revendication 1, caractérisé en ce que le crochet est formé d'une nappe recourbée (17) d'épaisseur globalement constante et que les voiles de rigidification (16, 16') ont une épaisseur (e,e'), mesurée parallèlement à la nappe, qui est inférieure à l'épaisseur (E) de cette nappe.

3. Organe d'accrochage selon la revendication 2, caractérisé en ce que la nappe (17) est repliée en sorte de présenter un profil en U à flancs parallèles (17A, 17B) inclinés par rapport à l'axe du boîtier.

4. Organe d'accrochage selon la revendicdation 2 ou la revendication 3, caractérisé en ce que la dimension en saillie (s,s') de chaque voile, mesurée perpendiculairement à la nappe, est sensiblement constante à l'écart du bec du crochet.

5. Organe d'accrochate selon l'une quelconque des revendications 1 à 4, caractérisé en ce que le crochet est bordé sur chacun de ses côtés par un voile de rigidification (16').

6. Organe d'accrochage selon la revendication 5, caractérisé en ce que ces voiles latéraux (16') ont une dimension en saillie (s') inférieure à celle (s) des autres, et présentent avec les voiles respectivement adjacents un écartement inférieur à celui qui existe entre les autres voiles (16).

7. Organe d'accrochage selon la revendication 6, caractérisé en ce qu'entre les voiles latéraux (16') sont disposés des voiles intermédiaires (16) en nombre impair de même dimension en saillie et de même écartement.

8. Organe d'accrochage selon l'une quelconque des revendications 1 à 7, caractérisé en ce que le boîtier et l'écrou ont des filetages à profil carré.

9. Organe d'accrochage selon l'une quelconque des revendications 1 à 8, caractérisé en ce que le boîtier et l'écrou sont en une matière plastique chargée en fibres de verre.

10. Organe d'accrochage selon la revendication 9, caractérisé en ce que la matière

0242282

# FIG.1

# FIG. 2

# FIG.3

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.⁴) |
|---|---|---|---|
| Y | GB-A-2 116 931  (MINIER)<br><br>* Figure 2; page 1, lignes 94-103 * | 1-3,5, 9 | B 65 G  39/04<br>F 16 B  45/00 |
| Y | GB-A-1 352 273  (GREEN)<br><br>* Figures 4,5; page 1, ligne 67 - page 2, ligne 4 * | 1-3,5, 9 | |
| A | | 7 | |

DOMAINES TECHNIQUES
RECHERCHES (Int. Cl.⁴)

B 65 G
F 16 B

Le présent rapport de recherche a été établi pour toutes les revendications

| Lieu de la recherche | Date d'achèvement de la recherche | Examinateur |
|---|---|---|
| LA HAYE | 29-05-1987 | WERNER D.M. |

CATEGORIE DES DOCUMENTS CITES

X : particulièrement pertinent à lui seul
Y : particulièrement pertinent en combinaison avec un
　　autre document de la même catégorie
A : arrière-plan technologique
O : divulgation non-écrite
P : document intercalaire

T : théorie ou principe à la base de l'invention
E : document de brevet antérieur, mais publié à la
　　date de dépôt ou après cette date
D : cité dans la demande
L : cité pour d'autres raisons

& : membre de la même famille, document correspondant

OEB Form 1503 03 82